# FASCICULE DE BREVET EUROPEEN

(11) **EP 3 292 942 B1**
(45) Date de publication et mention de la délivrance du brevet: **17.06.2020**
(21) Numéro de dépôt: 17188216.0
(22) Date de dépôt: 28.08.2017
(51) Int. Cl.: B23K 31/12, B29C 65/00, G01B 11/06, B23K 101/04, B23K 101/06

(54) **PROCÉDÉ DE FERMETURE D'UN EMBALLAGE TUBULAIRE ET DE CONTRÔLE EN CONTINU DE L'ÉTANCHÉITÉ DE SON EXTRÉMITÉ SOUDÉE APRÈS SON REMPLISSAGE**
VERFAHREN ZUM SCHLIESSEN EINER TUBULAREN VERPACKUNG UND ZUR FORTLAUFENDEN KONTROLLE DER DICHTIGKEIT IHRES GESCHWEISSTEN ENDES NACH IHRER FÜLLUNG
METHOD OF CLOSING OF A TUBULAR PACKAGING AND OF CONTINUOUSLY MONITORING OF THE SEALING OF ITS EXTREMITY BEING WELDED AFTER ITS FILLING

(30) Priorité: 26.08.2016 FR 1670469
(43) Date de publication de la demande: 14.03.2018
(73) Titulaire: Pierre Fabre Dermo-Cosmétique, 92100 Boulogne-Billancourt (FR)
(72) Inventeur: MOULIN, Philippe, 34260 La Tour sur Orb (FR)
(74) Mandataire: Ipside

(56) Documents cités:
- WO-A1-2015/169972
- FR-A1- 2 721 703
- GB-A- 1 202 826
- JP-A- S6 057 250
- JP-A- S63 253 205

## Description

L'invention concerne un procédé de fermeture d'un emballage tubulaire et de contrôle de l'étanchéité de son extrémité soudée conformément au préambule de la revendication 1 (voir par exemple WO2015/169972). L'invention est plus particulièrement, mais non exclusivement, destinée au domaine du conditionnement de produits cosmétiques stériles, liquides ou pâteux dans un emballage tubulaire souple, dont une extrémité est aplatie et soudée pour assurer son étanchéité. Un tel emballage permet de dispenser, par une ouverture généralement refermable à l'une de ses extrémités, une quantité précise du produit contenu, fonction de la pression exercée sur le tube.

Cela est plus particulièrement destinée à une ligne de conditionnement automatique d'un tel produit dans un tel emballage, avec des cadences de production de l'ordre de 200 tubes remplis par minute.

Une telle ligne de conditionnement en emballage tubulaire comprend un poste de remplissage où le produit est déversé dans l'extrémité ouverte du tube, positionné sous une trémie, par un dispositif de dosage et de remplissage. Selon un exemple de mise en oeuvre, le tube se trouve en position verticale sous la trémie, l'extrémité ouverte étant en haut. La ligne de conditionnement comprend un poste de fermeture dans lequel l'extrémité ouverte du tube est refermée par soudure. Selon un exemple de réalisation, la fermeture de cette extrémité ouverte comprend un pincement de l'extrémité du tube, les lèvres ainsi pincées étant alors soudées entre elles par des moyens appropriés. Le tube est ensuite évacué de la zone de conditionnement.

La figure 1, relative à l'art antérieur (voir WO2015/169972), représente l'extrémité soudée (110) d'un tube (100) après une telle opération. Cette extrémité soudée (110) est une zone striée (112) correspondant à la soudure des lèvres de l'extrémité du tube (100). Ladite zone striée (112) s'étend sur toute la largeur du tube sur une hauteur généralement comprise entre 5 mm et 7 mm. Un surplus de matière à l'extrémité supérieure de la zone striée est coupé, après l'opération de soudure, afin de réduire la hauteur de ladite zone striée et d'améliorer l'esthétique du tube. La soudure de la zone striée est réalisée par des mors striés, de sorte que cette zone est gaufrée sur une bonne part de sa surface, mais comprend fréquemment une zone plane (113) sur laquelle est gravé un code d'identification, ou des mentions légales. Selon d'autres modes de réalisation, des mors non striés sont utilisés et la zone dite striée est lisse.

Afin de réduire les risque de soudure défectueuse, le pincement et la soudure sont réalisés entre 0,5 mm et quelques millimètres au-dessus du niveau (111) de remplissage du tube, évitant ainsi la pollution des faces soudées par le produit conditionné.

Dans le cas où le produit contenu dans le tube est un produit cosmétique stérile, le remplissage est réalisé dans un environnement stérile. Mais même dans ces conditions de remplissage, il est souhaitable que l'extrémité inférieure de la soudure, côté produit, soit la plus proche possible du niveau de produit dans le tube, de sorte que le moins d'air possible soit emprisonné dans le tube, afin d'assurer une bonne conservation du produit. La soudure est ainsi réalisée au ras du niveau de produit contenu, augmentant ainsi les risques de pollution des interfaces soudées par du produit et de soudure défectueuse.

Dans ces circonstances, si la hauteur du pincement est mal positionnée par rapport au niveau de remplissage du tube, la zone de soudure est susceptible d'être polluée par du produit et le tube est susceptible présenter un défaut d'étanchéité. Ce défaut d'étanchéité n'est pas toujours visible sur le produit fini et dans certains cas ne se révèle que lors des premiers pressages sur le tube par l'utilisateur final. De plus, compte tenu des cadences élevées de production, un tel défaut est susceptible de se reproduire sur un grand nombre de tubes. Les causes de défaut d'étanchéité sont multiples et résultent par exemple, d'un mauvais réglage, d'une usure des mors de soudure, d'une erreur ou d'une dérive des paramètres de soudage ou de pincement, ou même des paramètres de remplissage, sans que cette liste ne soit ni exhaustive ni limitative. Même si le défaut d'étanchéité n'engendre pas de fuites, celui-ci peut conduire à la contamination du produit par des micro-organismes et compromettre sa conservation. L'invention vise à résoudre les inconvénients de l'art antérieur en détectant, de manière non destructive, tout défaut d'étanchéité de la fermeture d'extrémité d'un tube de conditionnement juste après la réalisation de la soudure, sans ralentir la cadence de production. Le procédé et le dispositif objet de l'invention permettent ainsi de rebuter tout tube présentant un tel défaut et de prévenir l'opérateur de la ligne de conditionnement de l'apparition d'un tel défaut, de sorte qu'il prenne les mesures appropriées pour y remédier.

Le document JP S63 253205 décrit un procédé de contrôle de l'extrémité soudée d'un tube. Compte tenu de la forme gaufrée de l'extrémité soudée, de la forme des défauts constatés, telle qu'une inclusion de produit dans la soudure, ce procédé de l'art antérieur ne permet pas de détecter de manière fiable les défauts visés par l'invention sur une ligne de conditionnement à haute cadence, et conduit, selon la sensibilité du réglage, soit à laisser passer des tubes comprenant des défauts, soit à des arrêts intempestifs de la ligne de conditionnement. Or l'intervention sur une ligne de conditionnement stérile est problématique et son redémarrage après intervention implique de rétablir la stérilité.

À cette fin, l'invention concerne un procédé de fermeture d'un emballage tubulaire et de contrôle de l'étanchéité de son extrémité soudée tel que défini dans la revendication 1.

Ainsi, une première soudure est réalisée au plus près du contenu du tube au moment de son pincement avant que la partie supérieure, au dessus du talon, ne soit elle-même soudée en rapprochant les lèvres du tube selon un motif gaufré. Le talon est lisse, et d'une épaisseur prévisible, sensiblement égale au double de l'épaisseur des parois du tube. Ainsi il est facile de contrôler de manière fiable tout défaut de soudure, que celui-ci soit localisé, par la présence de produit dans le talon, ou étendu.

L'invention est avantageusement mise en oeuvre selon les modes de réalisation définies dans les revendications dépendantes 2 et 3.

L'invention est exposée ci-après selon ses modes de réalisation préférés, nullement limitatifs, et en référence aux figures 1 à 6, dans lesquelles :
- la figure 1, relative à l'art antérieur, représente schématiquement une vue partielle de l'extrémité soudée d'un contenant tubulaire, figure 1A selon une vue de face et figure 1B selon une vue de gauche ;
- la figure 2 illustre schématiquement, en vue de face, une ligne de conditionnement d'un produit dans des contenants tubulaires ;
- la figure 3 montre, en vue de dessus, le dispositif de contrôle et les emballages tubulaires en coupe au niveau du talon de l'extrémité soudée ;
- la figure 4 illustre sur un diagramme épaisseur - distance, des exemples de variation d'épaisseur de l'extrémité soudée d'emballages tubulaires conformes et non conformes ;
- la figure 5 représente un organigramme d'un exemple de réalisation du procédé objet de l'invention ;
- et la figure 6 montre un exemple de réalisation de l'extrémité d'un tube lors de la mise en oeuvre du procédé objet de l'invention.

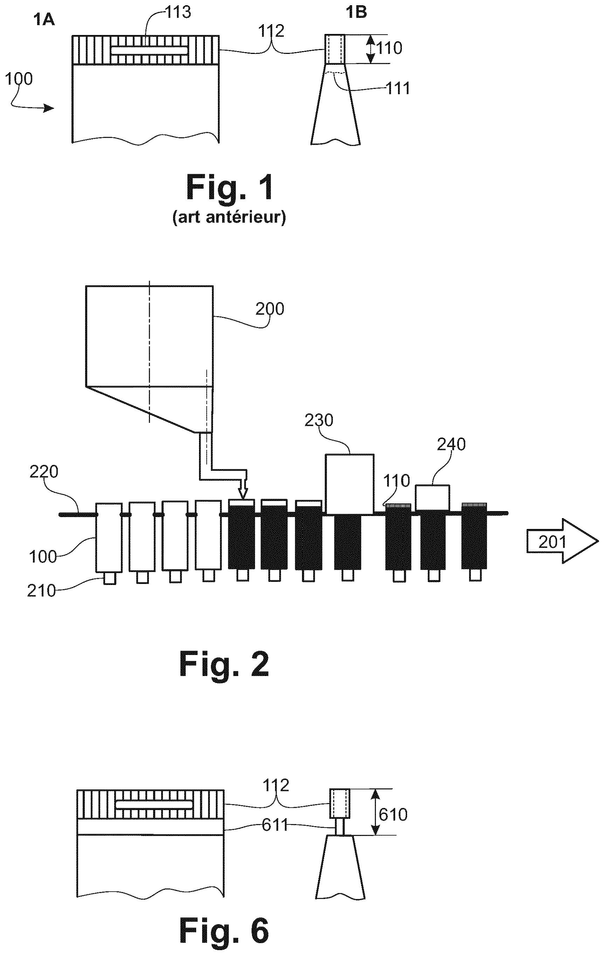

Sur la Figure 2, une ligne de conditionnement comprend une trémie (200) dans laquelle est contenu le produit à conditionner en vrac. À titre d'exemple non limitatif, le vrac est une préparation dermo-cosmétique ou galénique stérile, dont la viscosité est comprise entre 600 Cps et 45 000 Cps (6 à 45 Pa.s). Selon cet exemple de mise en oeuvre le conditionnement est réalisé en environnement stérile, selon un procédé décrit, par exemple, dans le document WO2015/169972. Le conditionnement d'un vrac stérile en environnement stérile permet d'assurer une longue conservation du produit conditionné sans que celui-ci ne contienne de conservateur. L'installation de la ligne de conditionnement en environnement stérile ne constitue pas un pré-requis pour la mise en oeuvre du dispositif et du procédé objets de l'invention, cependant l'invention est particulièrement pertinente dans ce cas, du fait de la complexité d'une intervention humaine sur ladite ligne de conditionnement et de la qualité requise de la fermeture du contenant pour assurer l'absence de toute contamination ultérieure du produit.

Les contenants (100) sont portés par un dispositif de transfert (220). Selon cet exemple de réalisation, l'une de leurs extrémités est fermée par un bouchon (220), l'autre extrémité est ouverte. Lorsque le tube est destiné à contenir un produit stérile, le bouchon est spécifiquement conçu pour éviter toute rétro-contamination du produit contenu dans le tube lors de son utilisation par le consommateur. Le dispositif de transfert (220) amène chaque contenant sous la trémie (200), selon un sens de progression (201), où ils sont remplis par leur extrémité ouverte, avant d'emmener le contenant ainsi rempli vers un poste (230) de fermeture. Ledit poste de fermeture réalise de manière automatisée un pincement du tube, au ras du niveau du produit contenu dans le tube, chassant ainsi le volume d'air contenu au dessus du produit;, le soudage du talon correspondant à la partie ainsi pincée, puis la soudure des lèvres de l'extrémité et la découpe du surplus de matière. Selon des exemples de réalisation, la soudure du talon et des lèvres de l'extrémité est réalisée par thermosoudage, par ultrasons ou par induction. Selon encore des exemples de réalisation, la technologie de soudage utilisée pour le talon est différente de la technologie de soudage utilisée pour joindre les lèvres du tube au-dessus du talon. À titre d'exemple non limitatif le talon est soudé par ultrasons, cette technologie permettant d'expulser une petite quantité de produit se trouvant, dans la zone de talon, entre les lèvres du tube après pincement, et la partie supérieure de la zone soudée est réalisée par thermosoudage.

Le tube ainsi scellé est conduit par le dispositif de transfert au poste de contrôle (240) de l'extrémité soudée (110). Les contenants sont de type tubulaire. Selon un exemple de réalisation, la capacité desdits contenants tubulaires est comprise entre 5 ml et 400 ml pour des tubes dont le diamètre est compris entre 13,5 mm et 50 mm.

Figure 6, après le poste de soudage, le tube réalisé comporte une extrémité soudée (610) comprenant une zone (612) gaufrée, comme selon l'art antérieur, et un talon (611)lisse et sensiblement rectangulaire s'étendant sur toute la largeur du tube. Ledit talon a une hauteur de l'ordre de 1 mm, et s'étend verticalement entre la zone gaufrée (612) et le niveau intérieur du produit déversé dans le tube, de sorte que la hauteur totale de l'extrémité soudée (610) est comprise entre 6 mm et 8 mm. L'extrémité inférieure de la zone de pincement permettant de réaliser le talon (611) est réalisée au ras voir très légèrement en dessous du niveau du produit déversé dans le tube de sorte à chasser tout l'air contenu dans la partie supérieure du tube.

Ainsi et conformément à l'invention, l'extrémité inférieure du talon est tangente avec le niveau du produit contenu dans le tube.

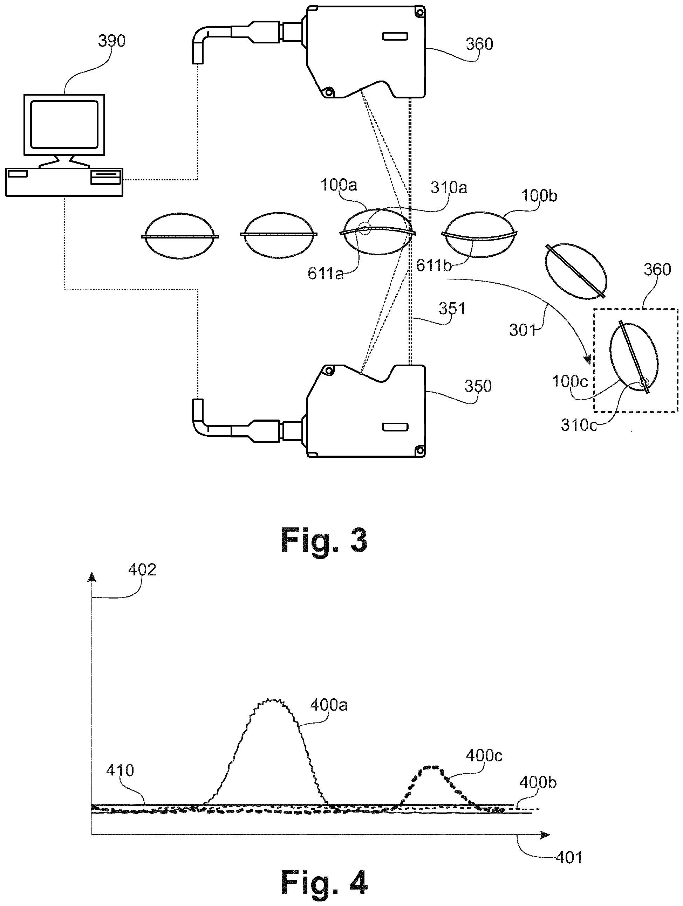

Figure 3, le poste de contrôle comprend deux profilomètres optiques (350, 360) disposés en vis-à-vis de part et d'autre du transfert transportant les tubes remplis et scellés, selon le sens de progression (301) indiqué.

Chaque profilomètre optique émet un faisceau laser (351) décrivant une ligne verticale qui se reflète sur l'extrémité soudée des tubes. Un dispositif optique mesure la déformation de cette ligne réfléchie sur la surface, et détermine ainsi le profil de celle-ci selon la ligne projetée ainsi que la distance par rapport à la source laser. À titre d'exemple non limitatif, un tel profilomètre optique est proposé sous la marque KEYENCE® modèle LJ-V7080. Ce matériel permet de réaliser des mesures à une fréquence maximale de 64 kHz. La mesure de profil réalisée concerne exclusivement le talon du tube. L'enregistrement du profil et de la distance, obtenus par chaque profilomètre (350, 360) pendant le déplacement du tube entre lesdits profilomètres, permet, par différence, de reconstruire l'évolution de l'épaisseur dudit talon. À cette fin, les signaux issus des profilomètres (350, 360) sont traités et analysés par un ordinateur (390) qui réalise sur ces signaux les actions de recalage, de filtrage, et la combinaison nécessaires pour obtenir une valeur de l'épaisseur de la zone mesurée. L'ordinateur (390) dialogue avec le directeur de commande de la ligne de conditionnement afin, notamment, de récupérer l'information relative au déplacement du transfert et ainsi calculer l'évolution de l'épaisseur de la zone mesurée en fonction de la distance parcourue par le tube entre les profilomètres. Le programme de traitement implanté dans l'ordinateur (390) met également en oeuvre le procédé objet de l'invention en interface avec le directeur de commande de la ligne de conditionnement.

Le contrôle d'épaisseur est réalisé au niveau du talon du tube, l'épaisseur de celui-ci présentant moins de variation d'épaisseur et une surface sensiblement lisse en comparaison de la zone striée, ceci en conditions nominales, mais par contre est extrêmement sensible à tout défaut de soudure.

À l'issue de l'opération de fermeture, l'extrémité soudée n'est pas nécessairement rectiligne, mais la double mesure permet de s'affranchir de ce défaut de forme. Le tube (100a) objet du contrôle est déplacé par le dispositif de transfert entre les deux profilomètres optiques (350, 360). Selon l'exemple illustré, le tube (100a) présente un défaut de fermeture qui se traduit par une modification locale (310a) de l'épaisseur du talon (611a).

Figure 4, l'évolution (400a) de l'épaisseur (402) du talon du tube contrôlé en fonction de la distance (401) fait apparaître le défaut d'épaisseur.

En revenant à la figure 3, un tube (100b) dont le talon (611b) est exempt de défaut, présente une épaisseur de talon sensiblement constante.

La figure 4 montre un exemple d'évolution de l'épaisseur (400b) d'un tube exempt de défaut. Une limite (410) de variation d'épaisseur admissible est définie expérimentalement. Cette limite est par exemple obtenue en mesurant le profil d'emballages présentant des défauts constatés. Selon des exemples de réalisation, ladite limite est définie de manière fixe, par exemple épaisseur nominale + 0,2 mm, ou selon une proportion de l'épaisseur nominale du talon, par exemple 1,2 fois l'épaisseur nominale. L'épaisseur nominale du talon est sensiblement égale au double de l'épaisseur de la paroi du tube, ainsi, à titre d'exemple non limitatif, pour des tube constitués d'un polymère thermoplastique dont le diamètre est compris entre 13,5 mm et 50 mm, l'épaisseur nominale du talon est de 0,96 mm et la limite (410) est de 1,1 mm. Selon d'autres modes de réalisation, des critères supplémentaires sont introduits pour détecter la non conformité de l'extrémité soudée, par exemple, seuls ou en combinaison : l'étendue selon la distance (401) du défaut constaté, les pentes de la variation d'épaisseur de part et d'autre du défaut présumé, ou encore le nombre de dépassements de la limite (410) sur un même profil, sans que cette liste ne soit ni exhaustive ni limitative. Ces modes de réalisation particuliers permettent, lorsque nécessaire, de différentier un défaut réel d'une variation naturelle du résultat selon la nature des emballages et du procédé de soudure utilisés.

La ligne de conditionnement comporte après le poste de contrôle un poste d'éjection (360). Ainsi, lorsqu'un tube (100c) est détecté comme présentant un défaut (310c) lors de la mesure de l'évolution de l'épaisseur (400c figure 4) du talon, et que ce défaut dépasse la limite admissible, ledit tube (100c) est éjecté du transfert lors de son passage au poste d'éjection (360), et est ainsi rebuté. À cette fin, lorsque le programme de traitement de l'ordinateur (390) détecte un profil d'épaisseur non conforme, la distance sur le transfert en termes de nombre de tubes et le poste d'éjection étant connue, il adresse au directeur de commande de la ligne de conditionnement un ordre d'éjection du tube, décalé du nombre de tubes ou du nombre d'incréments de déplacement du transfert correspondant à cette distance.

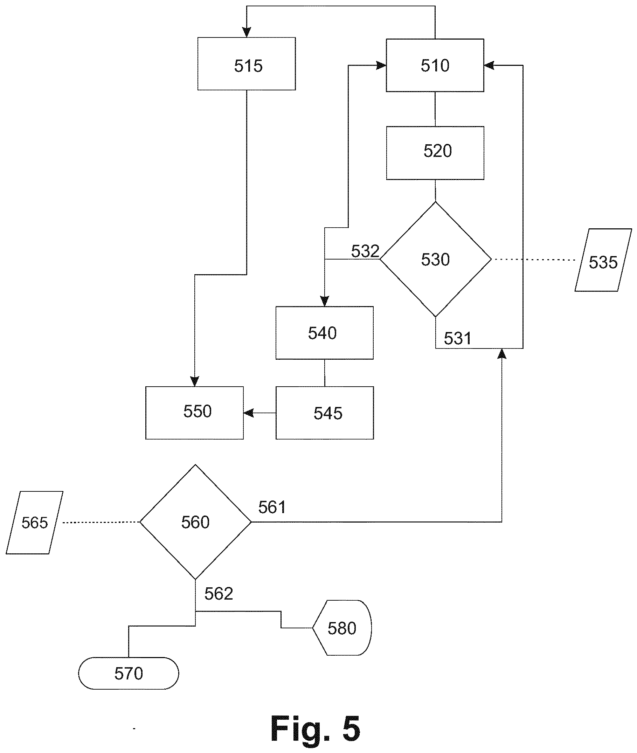

Figure 5, le procédé objet de l'invention comprend une première étape (510) de mesure de l'extrémité soudée de l'emballage tubulaire, cette mesure étant réalisée au niveau du talon de ladite extrémité soudée. Au cours d'une étape (515) de comptage, chaque tube contrôlé incrémente un compteur. Au cours d'une étape (520) de traitement, l'évolution de l'épaisseur de l'extrémité soudée est calculée. Au cours d'une étape (530) de comparaison, le profil d'épaisseur obtenu est comparé avec une limite (535) de déviation admissible par rapport au profil théorique ou attendu. Cette limite est par exemple fixée en début de série en fonction de la nature des emballages tubulaires utilisés, de leurs dimensions et du procédé de soudage. Si le profil est conforme (531) le tube continue son cheminement sur la ligne de conditionnement et l'opération est reprise sur le tube suivant. Si le profil n'est pas conforme (532) l'opération est reprise sur le tube suivant, mais parallèlement, une information d'éjection est envoyée (540) au directeur de commande de la ligne de conditionnement, de sorte à éjecter le tube non conforme lors de son passage au poste d'éjection. Au cours d'une étape (545) de comptage de défectueux, un second compteur est incrémenté pour chaque tube rebuté lors de l'étape (540) précédente. Au cours d'une étape (550) du calcul du taux de rebut les données du compteur de mesures réalisées et du compteur de défectueux sont rapprochées, afin de calculer le taux de rebut constaté. Au cours d'une étape (560) de comparaison, le taux de rebut calculé à l'étape (550) précédente est comparé à un taux de rebut (565) acceptable. Le taux de rebut acceptable est une valeur comprenant en fait plusieurs facteurs, par exemple, le taux de rebut doit être inférieur à 10 % sur les 10 dernières mesures, et inférieur à 2 % sur les 50 dernières mesures etc...d'autres modes de calcul sont possibles et programmables. Si le taux de rebut est inférieur au taux de rebut acceptable (561) alors le cycle continu. Si le taux de rebut est supérieur au taux de rebut acceptable (562), alors, la ligne de conditionnement est arrêtée (570) et une alarme est générée (580). Ainsi le procédé objet de l'invention permet d'éviter la poursuite du conditionnement en présence d'un défaut de réglage, ou d'une dérive des paramètres de conduite, et évite ainsi la mise au rebut d'un grand nombre de produits.

La description ci-avant et les exemples de réalisation, montrent que l'invention atteint le but visé, à savoir qu'elle permet le contrôle non destructif, automatique, en ligne et sans réduire la cadence de production de l'étanchéité de l'extrémité soudée d'un emballage tubulaire. L'invention est applicable sans difficulté au contrôle d'un emballage tubulaire comprenant deux extrémités soudées.

## Revendications

1. Procédé de fermeture d'un emballage tubulaire (100) et de contrôle de l'étanchéité de son l'extrémité soudée (110), après son remplissage jusqu'à un niveau de remplissage, notamment par un produit stérile, **caractérisé en ce qu'**il comprend les étapes consistant à :
i. réaliser une première soudure de l'extrémité du tube après pincement de ses lèvres de sorte à créer une zone soudée comprenant une zone (612) gaufrée et un talon (611) sensiblement rectangulaire s'étendant sur toute la largeur du tube et dont l'extrémité inférieure est tangente avec le niveau de remplissage ;
ii. mesurer (510) l'épaisseur dudit talon (611) sur la longueur de l'extrémité soudée (610) au moyen de deux profilomètres (350, 360) placés de part et d'autre dudit talon (611, 611a, 611b) de l'emballage tubulaire ;
iii. détecter (520) une variation d'épaisseur du talon (611, 611a, 611b) selon une direction parallèle à longueur de la soudure ;
iv. obtenir une limite (535) de variation acceptable de l'épaisseur de la partie mesurée ;
v. si la variation d'épaisseur détectée lors de l'étape (iii) est supérieure à la limite de variation acceptable (532), rebuter l'emballage tubulaire.

2. Procédé selon la revendication 1, mis en oeuvre sur une ligne de remplissage et defermeture automatique d'emballages tubulaires (100, 100a, 100b, 100c), comprenant les étapes consistant à :
vi. obtenir un taux de rebut autorisé (565);
vii. si l'étape (v) est répétée sur un proportion d'emballages tubulaires supérieure au taux de rebut autorisé obtenu à l'étape (vi) (562), arrêter (570) la ligne de remplissage automatique et générer (580) une alerte.

3. Procédé selon la revendication 1, dans lequel les profilomètres (350, 360) mis en oeuvre à l'étape ii) sont des profilomètres optiques sans contact.

## Patentansprüche

1. Verfahren zum Schließen einer rohrförmigen Verpackung (100) und zur Kontrolle der Dichtigkeit ihres verschweißten Endes (110) nach deren Füllung bis auf ein Füllniveau, insbesondere mit einem keimfreien Produkt, **dadurch gekennzeichnet, dass** es die Schritte umfasst, die darin bestehen:
i. eine erste Schweißnaht des Endes des Rohres nach dem Klemmen seiner Lippen zu realisieren, um eine verschweißte Zone zu kreieren, die eine geprägte Zone (612) und einen im Wesentlichen rechteckigen Absatz (611) umfasst, der sich über die gesamte Breite des Rohres erstreckt, und dessen unteres Ende an dem Füllniveau anliegend ist;
ii. die Dicke des Absatzes (611) über die Länge des verschweißten Endes (610) anhand von zwei Profilmessern (350, 360) zu messen (510), die beiderseits des Absatzes (611, 611a, 611b) der rohrförmigen Verpackung platziert sind;
iii. eine Dickenvariation des Absatzes (611, 611a, 611b) in einer Richtung parallel zu der Länge der Schweißnaht zu detektieren (520);
iv. einen annehmbaren Variationsgrenzwert (535) der Dicke des gemessenen Teils zu erhalten;
v. wenn die im Schritt (iii) detektierte Dickenvariation größer als der annehmbare Variationsgrenzwert (532) ist, die rohrförmige Verpackung auszuschließen.

2. Verfahren nach Anspruch 1, das in einer automatischen Abfüll- und Verschließlinie von rohrförmigen Verpackungen (100, 100a, 100b, 100c) angewandt wird, die Schritte umfassend, die darin bestehen:
vi. eine zulässige Ausschlussrate (565) zu erhalten;
vii. wenn der Schritt (v) an einem Anteil rohrförmiger Verpackungen wiederholt wird, der größer als die im Schritt
(vi) (562) erhaltene zulässige Ausschlussrate ist, die automatische Abfülllinie anzuhalten (570) und eine Warnung zu generieren (580).

3. Verfahren nach Anspruch 1, wobei die in Schritt ii) angewandten Profilmesser (350, 360) kontaktlose optische Profilmesser sind.

## Claims

1. Method for closing a tubular container (100) and for monitoring the tightness of the sealed end (110) thereof, after filling same to a filling level, particularly with a sterile product, **characterised in that** it comprises the steps consisting of:
i. creating a first seal of the end of the tube after squeezing the lips thereof so as to create a sealed zone comprising a crimped zone (612) and a substantially rectangular stub (611) extending over the entire width of the tube and the lower end whereof is tangent with the filling level;
ii. measuring (510) the thickness of said stub (611) over the length of the sealed end (610) by means of two profilometers (350, 360) placed on either side of said stub (611, 611a, 611b) of the tubular container;
iii. detecting (520) a variation of thickness of the stub (611, 611a, 611b) along a direction parallel with the length of the seal;
iv. obtaining an acceptable limit (535) of variation of the thickness of the part measured;
v. if the variation of thickness detected during step (iii) is greater than the acceptable limit of variation (532), rejecting the tubular container.

2. Method according to claim 1, used on an automatic filling and closure line of tubular containers (100, 100a, 100b, 100c), comprising the steps consisting of:
vi. obtaining a permitted reject rate (565);
vii. if step (v) is repeated on a proportion of tubular containers greater than the permitted reject rate obtained in step (vi) (562), shutting down (570) the automatic filling line and generating (580) an alert.

3. Method according to claim 1, wherein the profilometers (350, 360) used in step ii) are contactless optical profilometers.
